# EUROPEAN PATENT APPLICATION

(11) **EP 4 746 368 A1**
(43) Date of publication of application: **20.05.2026**
(21) Application number: 24809543.2
(22) Date of filing: 30.09.2024
(51) Int. Cl.: H04L 47/12, H04L 43/0876

(54) **MESSAGE FORWARDING METHOD AND APPARATUS, AND ELECTRONIC DEVICE**

(71) Applicant: New H3C Technologies Co., Ltd., Binjiang District Hangzhou Zhejiang 310052 (CN)
(72) Inventor: LIN, Changwang, Beijing 100102 (CN)
(74) Representative: 2SPL Patentanwälte PartG mbB
(86) International application number: PCT/CN2024/122664
(87) International publication number: WO 2026/065368

(57) **Abstract**

The present disclosure provides message forwarding methods, apparatuses, and electronic devices. **In** this example, any domain egress router interacts with a neighbor device to send current first link quality information of a local first domain interface (which includes current link quality information of the first domain interface in an inbound and/or outbound direction) and receive current second link quality information of a local second domain interface on the neighbor device sent by the neighbor device (which includes current link quality information of the second domain interface in the inbound and/or outbound direction). Based on the first and second link quality information, when congestion occurs on the first domain interface in a target direction (inbound direction or outbound direction), congestion adjustment is performed to switch a message from being transmitted in the target direction via the first domain interface to being transmitted in the target direction via the second domain interface. This ensures normal message transmission and improves network quality.

## Description

### TECHNICAL FIELD

The present disclosure relates to network communication technology and, in particular, to message forwarding methods, apparatuses and electronic devices.

### BACKGROUND

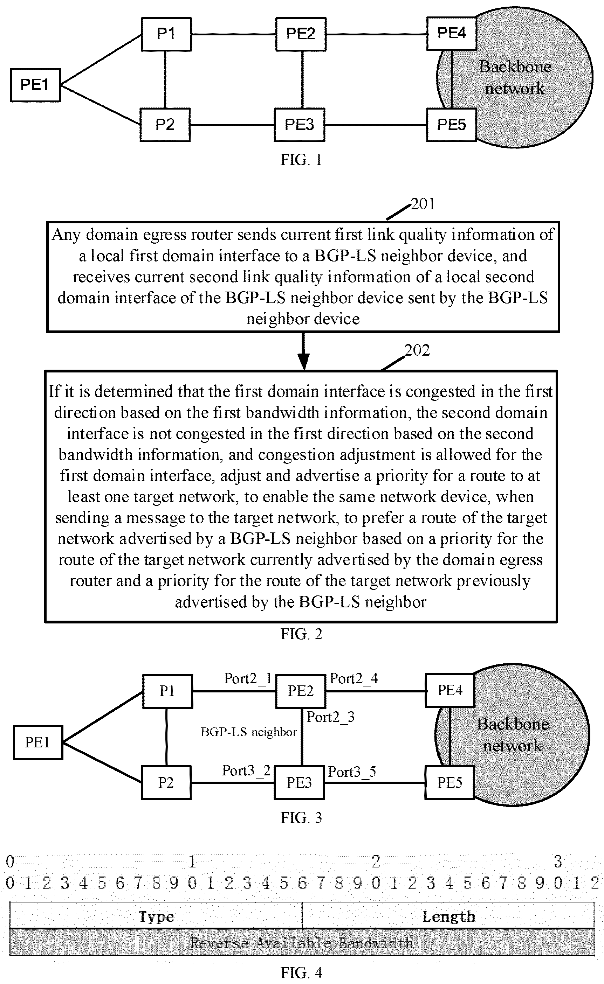

In a network application, an egress router of a domain (also named as a domain egress router, or a domain egress router of the domain) receives or sends a message over a link with a device outside the domain. The domain egress router here may be an egress router in an autonomous system (AS) or an egress router in a network domain (also named as administrative domain) divided according to the actual situation. As shown in FIG. 1, PE2 and PE3 serve as domain egress routers. Here, PE2 and PE3 may be egress routers of the same domain or egress routers of different domains. In FIG. 1, PE2 connects to PE4 outside the domain, i.e., on a backbone network, and PE3 connects to PE5 outside the domain, i.e., on the backbone network. PE2 receives a message from the backbone network through a link with PE4, or sends a message that have traversed its domain to the backbone network. PE3 receives a message from the backbone network through a link with PE5, or sends a message that have traversed its domain to the backbone network.

In practical implementation, congestion often occurs on links between domain egress routers and external devices outside the domain. For example, congestion may arise on the link between PE2 and PE4, or on the link between PE3 and PE5 shown in FIG. 1. This congestion can affect message transmission and degrade network quality.

### SUMMARY

The present disclosure provides message forwarding methods, apparatuses, and electronic devices, so as to realize that any domain egress router may promptly adjust congestion when detecting congestion on a link with a device outside the domain.

An example of the present disclosure provides a message forwarding method, performed by a domain egress router of a domain, where the domain egress router locally includes a first domain interface for connecting a device outside the domain and method including:
sending current first link quality information of the first domain interface to a neighbor device of the domain egress router, where the first link quality information includes at least one of current link quality information of the first domain interface in an inbound direction or current link quality information of the first domain interface in an outbound direction;
receiving current second link quality information of a local second domain interface on the neighbor device sent by the neighbor device, where the second link quality information includes at least one of current link quality information of the second domain interface in the inbound direction or current link quality information of the second domain interface in the outbound direction; and
where the first link quality information and the second link quality information are used for, in response to determining that a congestion occurs on the first domain interface in a target direction, performing a congestion adjustment to switch a message from being transmitted via the first domain interface in the target direction to being transmitted via the second domain interface in the target direction, and the target direction is the inbound direction or the outbound direction.

An example of the present disclosure further provides a message forwarding apparatus, applied to a domain egress router of a domain, wherein the domain egress router locally includes a first domain interface for connecting a device outside the domain and the apparatus including:
a sending unit, to send current first link quality information of the first domain interface to a neighbor device of the domain egress router, where the first link quality information includes at least one of current link quality information of the first domain interface in an inbound direction or current link quality information of the first domain interface in an outbound direction;
a receiving unit, to receive current second link quality information of a local second domain interface on the neighbor device sent by the neighbor device, where the second link quality information includes at least one of current link quality information of the second domain interface in the inbound direction or current link quality information of the second domain interface in the outbound direction; and
where the first link quality information and the second link quality information are used for, in response to determining that a congestion occurs on the first domain interface in a target direction, perform a congestion adjustment to switch a message from being transmitted via the first domain interface in the target direction to being transmitted via the second domain interface in the target direction, and the target direction is the inbound direction or the outbound direction.

An example of the present disclosure further provides an electronic device. The hardware structure may include a processor and a machine-readable storage medium, where the machine-readable storage medium stores machine-executable instructions executable by the processor, and the processor is to execute the machine-executable instructions to realize the blocks of the method disclosed above.

It can be seen from the above technical solution that, in the examples of the present disclosure, any domain egress router interacts with a neighbor device to send the current first link quality information of the local first domain interface (the first link quality information includes current link quality information of the first domain interface in the inbound direction and/or current link quality information of the first domain interface in the outbound direction) and receive the current second link quality information of the local second domain interface on the neighbor device (the second link quality information includes current link quality information of the second domain interface in the inbound direction and/or current link quality information of the second domain interface in the outbound direction). Using the first link quality information and second link quality information, when congestion occurs on the first domain interface in the target direction (inbound direction or outbound direction), congestion adjustment is performed to switch a message from being transmitted via the first domain interface in the target direction to being transmitted via the second domain interface in the target direction. This ensures normal message transmission and improves network quality.

### BRIEF DESCRIPTION OF DRAWINGS

The accompanying drawings, which are incorporated in and constitute a part of the specification, illustrate examples consistent with the present disclosure, and are used together with the specification to explain the principles of the present disclosure.
FIG. 1 is a schematic diagram of an existing networking.
FIG. 2 is a flowchart of a method according to an example of the present disclosure.
FIG. 3 is an application networking diagram according to an example of the present disclosure.
FIG. 4 is a schematic diagram of an available bandwidth attribute in an inbound direction according to an example of the present disclosure.
FIG. 5 is a schematic diagram of a utilization bandwidth attribute in an inbound direction according to an example of the present disclosure.
FIG. 6 is an implementation schematic diagram of Example 1 of the present disclosure.
FIG. 7 is an implementation schematic diagram of Example 2 of the present disclosure.
FIG. 8 is a structural diagram of an apparatus according to an example of present disclosure.
FIG. 9 is a structural diagram of an electronic device according to an example of present disclosure.

### DETAILED DESCRIPTION

In order to make those skilled in the art better understand technical solutions provided by the examples of the present disclosure, and make the above objects, features and advantages of the examples of the present disclosure more apparent and easy to understand, the technical solutions in the examples of the present disclosure will be further described in detail below with reference to the accompanying drawings.

Referring to FIG. 2, FIG. 2 is a flowchart of a method according to an example of the present disclosure. This process may be performed by a domain egress router. A domain egress router here may be an egress router deployed in a network domain such as an AS or an administrative domain. FIG. 3 illustrates an application networking of the process shown in FIG. 2, where the domain egress routers are, for example, PE2 and PE3 shown in FIG. 3.

In this example, the domain egress router locally has a first domain interface for connecting to a device outside the domain. For example, as shown in FIG. 3, Port2_4 on PE2 for connecting to an external device PE4, and Port3_5 on PE3 for connecting to an external device PE5.

In this example, the domain egress router will establish neighbor connections with other routers. Other routers here may be named as neighbor devices of the domain egress router. As an example, the neighbor connection here may be a Border Gateway Protocol - Link State (BGP-LS) neighbor connection, and correspondingly, the neighbor device may be named as a BGP-LS neighbor device. For example, in FIG. 3, PE2 and PE3 are BGP-LS neighbors. In some examples, a neighbor device of any domain egress router may be specified according to actual requirements to enable the domain egress router to establish a neighbor connection with the neighbor device.

As an example, the neighbor device such as the BGP-LS neighbor device may be an egress router of a network domain. For example, in this example, the egress router of any domain and its neighbor devices may be different egress routers in the same network domain, or the egress router of any domain and its neighbor devices may be different egress routers in different network domains, which is not specifically limited in this example. In order to facilitate the distinction, this example will refer to an interface on the neighbor device for connecting a device outside a domain as a second domain interface.

In this example, any domain egress router and its neighbor devices, such as the above BGP-LS neighbor devices, will advertise routes corresponding to at least one identical network. The network here may be an internet protocol (IP) address, a network segment address, etc., which is not specifically limited in this example.

Specifically, any domain egress router and its neighbor devices will advertise routes corresponding to at least one identical network through the first domain interface and the second domain interface, respectively. Taking FIG. 3 as an example, PE2 advertises a route to a network, i.e., 10.0.1.1/24, to PE4 in an outbound direction via Port2_4. PE3 advertises a route to the network i.e., 10.0.1.1/24 to PE5 in the outbound direction via Port3_5, i.e., PE2 and PE3, which are BGP-LS neighbors of each other, advertise routes corresponding to the same network 10.0.1.1/24 via domain interfaces Port2_4 and Port3_5, respectively. Using this method, PE4 will ultimately receive two routes to 10.0.1.1/24.

Specifically, any domain egress router and its neighbor devices, such as the above BGP-LS neighbor devices, will also receive routes corresponding to at least one identical network through the first domain interface and the second domain interface, respectively, and advertise these routes through other interfaces, such as intra-domain interfaces (connecting to devices within the domain). Taking FIG. 3 as an example, PE2 receives a route to the network 172.16.1.0/24 in an inbound direction via Port2_4 and advertises the route to 172.16.1.0/24 in the outbound direction via a local intra-domain interface Port2_1. PE3 receives a route to the network 172.16.1.0/24 in the inbound direction via Port3_5 and advertises the route to 172.16.1.0/24 in the outbound direction via a local intra-domain interface Port3_1. Using this method, PE1 will ultimately receive two routes to 172.16.1.0/24.

Based on the above description, as shown in FIG. 2, the process may include the following blocks.

At block 201, any domain egress router sends current first link quality information of a local first domain interface to a neighbor device, such as the above BGP-LS neighbor device.

It should be noted that the interface on the domain egress router connecting the neighbor device such as the BGP-LS neighbor device is not the first domain interface, and similarly, the interface on the neighbor device such as the BGP-LS neighbor device connecting the domain egress router is not the second domain interface.

As an example, the first link quality information includes current link quality information of the first domain interface in an inbound direction and/or an outbound direction. Here, the current link quality information of the first domain interface in the inbound direction includes, for example, an available bandwidth of the first domain interface in the inbound direction and/or a utilization bandwidth of the first domain interface in the inbound direction. The inbound direction of the first domain interface refers to a direction in which the first domain interface receives a message.

In some examples, in this example, the domain egress router may carry the current available bandwidth and/or utilization bandwidth of the first domain interface in the inbound direction by means of an extended specified message such as a BGP-LS message (which may specifically be an UPDATE message).

For example, in this example, a new field for inbound direction available bandwidth attribute field and/or inbound direction utilization bandwidth attribute field may be newly added to the BGP-LS message, such as an UPDATE message. The inbound direction available bandwidth attribute field is used to carry available bandwidth such as the above available bandwidth. The inbound direction utilization bandwidth attribute field is used to carry utilization bandwidth such as the above utilization bandwidth.

In some examples, the inbound direction available bandwidth attribute field may be in an TLV (Type-Length-Value) format. Here, the TLV format mainly includes a Type field T, a Length field L, and a Value field V, as shown in FIG. 4. Table 1 shows an example of the TLV:

**Table 1**

| Field | Length | Description |
|---|---|---|
| T: Type | 16bit | Type, indicates an available bandwidth notification in the inbound direction |
| L: Length | 16bit | Indicate length |
| V: Reverse Available Bandwidth | 32bit | Indicate an available bandwidth in the inbound direction, in Kbps (kilobits per second) |

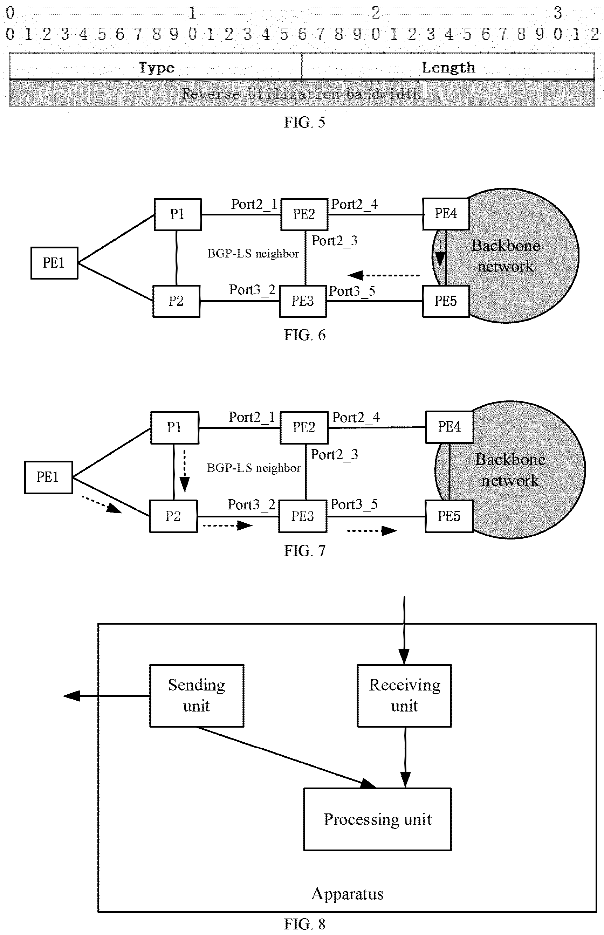

In some examples, the inbound direction utilization bandwidth attribute field may be in the TLV format. Here, the TLV format mainly includes a Type field T, a length field L, and a Value field V, as shown in FIG. 5. Table 2 shows an example of the TLV:

**Table 2**

| Field | Length | Description |
|---|---|---|
| T: Type | 16bit | Type, indicates a utilization bandwidth notification in the inbound direction |
| L: Length | 16bit | Indicate length |
| V: Reverse Utilization Bandwidth | 32bit | Indicate a utilization bandwidth in the inbound direction, in Kbps (kilobits per second) |

As an example, the first link quality information may further include an available bandwidth of the first domain interface in the outbound direction and/or a utilization bandwidth of the first domain interface in the outbound direction. Here, the outbound direction of the first domain interface refers to a direction in which the first domain interface sends a message.

The current available bandwidth of the first domain interface in the outbound direction may be carried by means of an existing defined outbound direction available bandwidth attribute TLV field that may be carried in the message.

The current utilization bandwidth of the first domain interface in the outbound direction may be carried by an existing defined outbound direction utilization bandwidth attribute TLV field that may be carried in the message.

At block 202, current second link quality information of a local second domain interface on the neighbor device sent by the neighbor device is received, where the second link quality information includes current link quality information of the second domain interface in an inbound direction and/or an outbound direction, and where the first link quality information and the second link quality information are used for, in response to determining that a congestion occurs on the first domain interface in a target direction, performing a congestion adjustment to switch a message from being transmitted via the first domain interface in the target direction to being transmitted via the second domain interface in the target direction, and the target direction is the inbound direction or the outbound direction.

As an example, the current link quality information of the second domain interface in the inbound direction may include an available bandwidth of the second domain interface in the inbound direction and/or a utilization bandwidth of the second domain interface in the inbound direction. The inbound direction of the second domain interface refers to a direction in which the second domain interface receives a message.

Similarly, in this example, the above neighbor device, such as a BGP-LS neighbor device, may carry the current available bandwidth and/or utilization bandwidth of the second domain interface in the inbound direction by means of an extended specified message such as a BGP-LS message (which may specifically be an UPDATE message). Please refer to the description of block 201 for details.

Similarly, the current link quality information of the second domain interface in the inbound direction may further include an available bandwidth of the second domain interface in the outbound direction and/or a utilization bandwidth of the second domain interface in the outbound direction. The outbound direction of the second domain interface refers to a direction in which the second domain interface sends a message. The current available bandwidth of the second domain interface in the outbound direction may be carried by means of an existing defined outbound direction available bandwidth attribute TLV field that may be carried in the message. The current utilization bandwidth of the second domain interface in the outbound direction may be carried by an existing defined outbound direction utilization bandwidth attribute TLV field that may be carried in the message.

In this example, the domain egress router may perform a congestion adjustment based on the first link quality information and the second link quality information in response to determining that a congestion occurs on the first domain interface in a target direction, so as to switch a message from being transmitted via the first domain interface in the target direction to being transmitted via the second domain interface in the target direction. That is, in this example, the first link quality information and the second link quality information are used as a basis for congestion adjustment when congestion occurs on the first domain interface in the target direction to realize switching a message from being transmitted via the first domain interface in the target direction to being transmitted via the second domain interface in the target direction. Examples will be described below and will not be repeated here.

At this point, the process shown in FIG. 2 is completed.

Through the process shown in FIG. 2, in this example, any domain egress router interacts with a neighbor device to send the current first link quality information of the local first domain interface (the first link quality information includes current link quality information of the first domain interface in the inbound direction and/or outbound direction) and receive the current second link quality information of the local second domain interface on the neighbor device (the second link quality information includes current link quality information of the second domain interface in the inbound direction and/or outbound direction). Using the first link quality information and second link quality information, congestion adjustment is performed when congestion occurs on the first domain interface in the target direction (inbound direction or outbound direction), switching a message from being transmitted via the first domain interface in the target direction to being transmitted via the second domain interface in the target direction. This ensures normal message transmission and improves network quality.

It should be noted that in the flow shown in FIG. 1, the domain egress router specifically determines whether congestion occurs on the first domain interface in the target direction based on the first link quality information and whether congestion occurs on the second domain interface in the target direction based on the second link quality information. When it is determined based on the first link quality information that congestion occurs on the first domain interface in the target direction and based on the second link quality information that no congestion occurs on the second domain interface in the target direction, a congestion adjustment is performed to reduce the congestion of the first domain interface in the target direction based on the first link quality information and second link quality information.

In some examples, as an example, this example can determine congestion based on available bandwidth. For example, determining that the congestion occurs on the first domain interface in the target direction based on the first link quality information may include: if it is determined based on the first link quality information that a first available bandwidth of the first domain interface in the target direction is less than a lower limit of a preset available bandwidth threshold for the target direction, then it is determined that a congestion occurs on the first domain interface in the target direction.

Correspondingly, determining that no congestion occurs on the second domain interface in the target direction based on the second link quality information includes: if it is determined based on the second link quality information that the second available bandwidth of the second domain interface in the target direction is greater than or equal to the lower limit of preset available bandwidth threshold for the target direction, then it is determined that no congestion occurs on the second domain interface in the target direction.

As another example, this example can also determine congestion based on utilization bandwidth. For example, determining that the first domain interface is congested in the target direction based on the first link quality information may include: if it is determined based on the first link quality information that the utilization bandwidth of the first domain interface in the target direction is greater than or equal to an upper limit of a utilization bandwidth threshold for the target direction, then it is determined that the congestion occurs on the first domain interface in the target direction. Correspondingly, determining that no congestion occurs on the second domain interface in the target direction based on the second link quality information includes: if it is determined based on the second link quality information that the utilization bandwidth of the second domain interface in the target direction is less than the upper limit of the utilization bandwidth threshold for the target direction, then it is determined that no congestion occurs on the second domain interface in the target direction.

After determining that congestion occurs on the first domain interface in the target direction and no congestion occurs on the second domain interface in the target direction, as described above, a congestion adjustment is performed to reduce the congestion of the first domain interface in the target direction based on the first link quality information and second link quality information.

In some examples, performing, according to the first link quality information and the second link quality information, the congestion adjustment to reduce the congestion first domain interface in the target direction may include: determining, according to the first link quality information and the second link quality information, whether a current message carrying capacity of the second domain interface in the target direction allows carrying the message originally transmitted via the first domain interface in the target direction.

If so, a priority for a route of a target network previously advertised by the domain egress router to a target device is adjusted, where the adjusted priority is lower than the priority before adjustment, the neighbor device, such as a BGP-LS neighbor device, is also connected to the target device and a priority for a route of the target network previously advertised by the neighbor device to the target device is higher than the adjusted priority; and then, the adjusted priority for the route of the target network is advertised to the target device, to cause the target device, when sending a message to the target network, selects the route of the target network advertised by the neighbor device to send the message based on the adjusted priority for the route of the target network advertised by the domain egress router and the priority for the route of the target network advertised by the neighbor device. This ultimately achieves switching a message from being transmitted via the first domain interface in the target direction to being transmitted via the second domain interface in the target direction.

In response to determining that the current message carrying capacity of the second domain interface in the target direction does not allow carrying the message originally transmitted via the first domain interface in the target direction, the congestion adjustment may be ended.

In some examples, in this example, determining, according to the first link quality information and the second link quality information, whether a current message carrying capacity of the second domain interface in the target direction allows carrying the message originally transmitted via the first domain interface in the target direction specifically includes: calculating a first bandwidth difference between a preset target direction bandwidth threshold and a first available bandwidth of the first domain interface in the target direction, where the first available bandwidth is obtained based on the first link quality information; calculating a second bandwidth difference between a second available bandwidth of the second domain interface in the target direction and the target direction bandwidth threshold, where the second available bandwidth is obtained based on the second link quality information; and in response to determining that the second bandwidth difference is greater than or equal to the first bandwidth difference, determining that the current message carrying capacity of the second domain interface in the target direction allows carrying the message originally transmitted via the first domain interface in the target direction.

In this example, the target direction bandwidth threshold refers to a threshold when the first domain interface and the second domain interface normally receive a message in the target direction, and may be set according to actual requirements. In practice, the target direction bandwidth threshold is generally greater than the lower limit of the preset available bandwidth threshold.

As an example, the target network may be determined by: counting traffic of each network transmitted in the target direction of the first domain interface within a set time period; selecting, based on the traffic of each network and target traffic, at least one network as the target network, where a sum of traffic of each target network transmitted in the target direction of the first domain interface is less than or equal to the target traffic, where the target traffic indicates a number of messages that an adjustable bandwidth of the second domain interface in the target direction allows to carry. Here, the adjustable bandwidth of the second domain interface in the target direction is less than or equal to a difference between a second available bandwidth of the second domain interface in the target direction and a preset target direction bandwidth threshold, the second available bandwidth is obtained based on the second link quality information, and the target direction bandwidth threshold indicates a threshold when the first domain interface normally transmits a message in the target direction.

Taking the target direction as an example, specifically, the target network may be determined by:
counting traffic received by the first domain interface in the inbound direction and sent to each of networks within a set time period, and the traffic of each of the networks counted within the set time period may be the total number of messages received by the first domain interface in the inbound direction intended for the networks. Then, based on the counted traffic of the networks and the target traffic of the second domain interface in the inbound direction, at least one target network is selected from the networks.

A sum of the counted traffic received by the first domain interface in the inbound direction and sent to each of the target networks is less than or equal to the target traffic. The target traffic here indicates traffic that an adjustable bandwidth of the second domain interface in the inbound direction allows to carry. The adjustable bandwidth of the second domain interface in the inbound direction is determined based on a difference between the available bandwidth of the second domain interface in the inbound direction and a set inbound direction bandwidth threshold. For example, the adjustable bandwidth of the second domain interface in the inbound direction is the difference between the available bandwidth of the second domain interface in the inbound direction and the set inbound direction bandwidth threshold. The inbound direction bandwidth threshold refers to a threshold for the first domain interface and the second domain interface to normally receive messages in the inbound direction.

In some examples, in this example, the networks may be sorted in descending order based on the traffic received by the first domain interface in the inbound direction and sent to each network, resulting in a sequence. Then, at least one target network is selected from the sequence in order, following the principle that the total traffic received by the first domain interface in the inbound direction and sent to each target network is less than or equal to the target traffic of the second domain interface in the inbound direction. This approach ensures that the network with the highest traffic is preferentially selected as the target network.

Taking the target direction as the outbound direction as an example, in this example, the target network may be determined by: selecting at least one target network from the networks based on the counted traffic sent by the first domain interface in the outbound direction to the networks, and target traffic of a target second domain interface in the outbound direction, where a sum of the counted traffic sent by the first domain interface to the target networks in the outbound direction is less than or equal to the target traffic of the second domain interface in the outbound direction. The adjustable bandwidth of the second domain interface in the outbound direction is determined based on a difference between the available bandwidth of the second domain interface in the outbound direction and a set outbound direction bandwidth threshold. For example, the adjustable bandwidth of the second domain interface in the outbound direction is the difference between the available bandwidth of the second domain interface in the outbound direction and the set outbound direction bandwidth threshold. The outbound direction bandwidth threshold refers to a threshold for the first domain interface and the second domain interface to normally receives messages in the outbound direction.

In some examples, in this example, the networks may be sorted in descending order based on the traffic sent by the first domain interface in the outbound direction to each network, resulting in a sequence. Then, at least one target network is selected from the sequence in order, following the principle that the total traffic sent by the first domain interface in the outbound direction to each target network is less than or equal to the target traffic of the second domain interface in the outbound direction. This approach ensures that the network with the highest traffic is preferentially selected as the target network.

As an example, adjusting the priority for the route of the target network may include: adjusting a multi-exit discriminator (MED, or named as MULTI_EXIT_DISC) value for the route of the target network previously advertised by the domain egress router to the target device, where a priority indicated by the adjusted MED value is lower than a priority indicated by the MED value before adjustment and lower than a priority indicated by a MED value for the route of the target network advertised by the neighbor device. Generally, the smaller the MED value, the higher the priority. Based on this, in this example, adjusting the MED value for the route of the target network may be as follows: increasing the MED value for the route of the target network (for example, increasing by 100).

In some examples, in this example, after the domain egress router completes the previous route adjustment, it will notify an adjustment result to a neighbor device (such as a BGP-LS neighbor device), to instruct the neighbor device (such as a BGP-LS neighbor device) to prohibit the adjustment of the route of the target network, to prevent the neighbor device (such as a BGP-LS neighbor device) from subsequently adjusting the route of the same target network, so as to avoid causing a route shock. The adjustment result at least includes an indication that the priority for the route of the target network has been adjusted.

In some examples, the notification may be implemented through BGP-LS extensions, or through extensions using BGP FlowSpec, or through other new protocols. This example does not specify a particular method.

Based on this, the above, when selecting whether a network is a target network, may further check whether the network has received a notification from a neighbor device, such as a BGP-LS neighbor device, that the priority for the route of the network has been adjusted. If not, the network is determined to be a target network.

The process shown in FIG. 2 is described below by means of two examples:

### Example 1:

Example 1 is described by taking the target direction as the inbound direction as an example:
Taking the network shown in FIG. 6 as an example, as shown in FIG. 6, both PE2 and PE3 are domain egress routers, and PE2 and PE3 have established BGP-LS neighbors.

PE2 detects an available bandwidth of a local domain interface Port2_4 in the inbound direction. PE3 will also detect an available bandwidth of a local domain interface Port3_5 in the inbound direction. In some examples, PE2 and PE3 may detect the available bandwidth of the local domain interface in the inbound direction according to the same period.

PE2 sends the available bandwidth of the local domain interface Port2_4 in the inbound direction to the BGP-LS neighbor, namely PE3, through the interface Port2_3. PE3 sends the available bandwidth of the local domain interface Port3_5 in the inbound direction to the BGP-LS neighbor, namely PE2, through the interface Port3_2.

Taking PE2 as an example, PE2 determines whether the available bandwidth of the local domain interface Port2_4 in the inbound direction is less than a lower limit of a preset available bandwidth threshold for the inbound direction. If so, it is determined that congestion occurs on the local domain interface Port2_4 in the inbound direction; otherwise, it is determined that congestion does not occur on the local domain interface Port2_4 in the inbound direction. The lower limit of the preset available bandwidth threshold may be set according to the actual demand, and this example is not specifically limited. In some examples, the available bandwidth of the first domain interface in the inbound direction may be determined based on a maximum allowed available bandwidth (i.e., total bandwidth) and the utilization bandwidth of the first domain interface in the inbound direction.

In addition, PE2 will further determine whether the local domain interface Port3_5 of PE3 is congested based on the received available bandwidth of the local domain interface Port3_5 of PE3 in the inbound direction. For example, it is determined whether the available bandwidth of Port3_5 in the inbound direction is greater than or equal to the lower limit of the preset available bandwidth threshold for the inbound direction, and if so, it is determined that Port3_5 is not congested in the inbound direction.

It should be noted that Example 1 is described taking PE2 and PE3 sending available bandwidth as an example. If PE3 does not send the available bandwidth of the domain interface Port3_5 in the inbound direction, but sends the utilization bandwidth of the domain interface Port3_5 in the inbound direction, PE2 can determine the available bandwidth of the domain interface Port3_5 in the inbound direction based on a maximum allowed available bandwidth (i.e., total bandwidth) and the utilization bandwidth of the domain interface Port3_5 in the inbound direction.

In some examples, in this example, the total allowed bandwidth of all domain interfaces in the inbound direction may be the same by default, or the total allowed bandwidth of the local domain interface Port3_5 of PE3 in the inbound direction may be pre-configured on PE2. Or, PE3 may carry the total allowed bandwidth of the local domain interface Port3_5 in the inbound direction through a defined total bandwidth TLV. This example is not specifically limited.

It should be noted that the above is described in terms of available bandwidth as an example, and this example may also determine congestion based on utilization bandwidth. For example, PE2 detects the utilization bandwidth of the local domain interface Port2_4 in the inbound direction. PE3 will also detect the utilization bandwidth of the local domain interface Port3_5 in the inbound direction. In some examples, PE2 and PE3 may detect the utilization bandwidth of the local domain interface in the inbound direction according to the same period.

PE2 sends the utilization bandwidth of the local domain interface Port2_4 in the inbound direction to the BGP-LS neighbor, namely PE3, through the interface Port2_3. PE3 sends the utilization bandwidth of the local domain interface Port3_5 in the inbound direction to the BGP-LS neighbor, namely PE2, through the interface Port3_2.

Taking PE2 as an example, PE2 will determine whether the utilization bandwidth of the local domain interface Port2_4 in the inbound direction is greater than or equal to an upper limit of a set utilization bandwidth threshold for the inbound direction. If so, it is determined that the local domain interface Port2_4 is congested in the inbound direction; otherwise, it is determined that the local domain interface Port2_4 is not congested in the inbound direction. The upper limit of the set utilization bandwidth threshold may be set according to the actual demand, and this example is not specifically limited.

In addition, PE2 will further determine whether the local domain interface Port3_5 of PE3 is congested based on the received utilization bandwidth of the local domain interface Port3_5 of PE3 in the inbound direction. For example, it is determined whether the utilization bandwidth of Port3_5 in the inbound direction is greater than or equal to the upper limit of the set available bandwidth threshold for the inbound direction, and if not, it is determined that Port3_5 is not congested in the inbound direction.

It should be noted that Example 1 is described taking PE2 and PE3 sending utilization bandwidth as an example. If PE3 does not send the utilization bandwidth of the domain interface Port3_5 in the inbound direction, but sends the available bandwidth of the domain interface Port3_5 in the inbound direction, PE2 can determine the utilization bandwidth of domain interface Port3_5 in the inbound direction based on the total allowed bandwidth and the available bandwidth of the domain interface Port3_5 in the inbound direction. The total allowed bandwidth of the domain interface Port3_5 in the inbound direction is described above and will not be repeated here.

If PE2 determines that the local domain interface Port2_4 is congested in the inbound direction and determines that the domain interface Port3_5 on PE3 is not congested in the inbound direction, a first bandwidth difference between a set inbound bandwidth threshold and an available bandwidth of Port2_4 in the inbound direction will be calculated, the inbound bandwidth threshold refers to a threshold when messages are normally received in the inbound direction, which is generally greater than the lower limit of the preset available bandwidth threshold. A second bandwidth difference between an available bandwidth of Port3_5 in the inbound direction and the set inbound bandwidth threshold will also be calculated. If the second bandwidth difference is found to be greater than or equal to the first bandwidth difference, PE2 performs congestion adjustment on the local domain interface Port2_4. For ease of description, the second bandwidth difference may be referred to as the adjustable bandwidth of the local domain interface Port3_5 on PE3.

Specifically, when PE2 performs congestion adjustment on the local domain interface Port2_4, firstly, according to the counted traffic (or the number of messages) received by the local domain interface Port2_4 in the inbound direction and sent to each network, the networks are sorted to obtain a sequence, and at least one target network is selected from the sequence. The sum of the counted number of messages received by the local domain interface Port2_4 in the inbound direction and sent to each of the target networks is less than or equal to the number of messages allowed to be carried by the adjustable bandwidth of the local domain interface Port3_5 on PE3. This approach ensures that the network with the largest number of messages is preferentially selected as the target network.

After determining the target network, PE2 adjusts the MED value for the route of the target network and advertises it in the outbound direction through the local domain interface Port2_4. The adjusted MED value indicates a lower priority than the MED value before adjustment. Generally, the smaller the MED value, the higher the priority. Based on this, in this example, adjusting the MED value for the route of the target network may be as follows: increasing the MED value for the route of the target network (for example, increasing by 100).

For example, the target network is a network corresponding to an IP address of PE1. PE2 and PE3 have previously advertised the route of PE1 to PE4. After the above adjustment, the MED value for the route of PE1 currently advertised by PE2 is not only greater than the MED value for the route of PE1 previously advertised by PE2 but also greater than the MED value for the route of PE1 previously advertised by PE3, in order to finally realize that the route of PE1 advertised by PE3 is better than the route of PE1 currently advertised by PE2. Based on this, when PE4 subsequently sends a message to PE1, it will prefer the route of PE1 advertised by PE3 based on the MED value for the latest route of PE1 advertised by PE2 and the priority for the route of PE1 previously published by PE3, i.e., the message that PE4 sends to PE1 no longer passes through PE2, but is forwarded through PE3. This is illustrated by the dashed line in FIG. 6.

In this example, PE2 adjusts the MED value for the route of the target network and advertises it in the outbound direction through the local domain interface Port2_4, which further includes sending the adjustment result to PE3 through Port2_3. The adjustment result at least includes an indication that the priority for the route of the target network has been adjusted, so as to prevent the route shock caused by the subsequent adjustment of the route of the same target network by PE3. For example, the target network is a network corresponding to an IP address of PE1, and PE3 will not adjust the route of PE1 regardless of whether the local interface is congested or not.

The above description takes PE2 as an example, and PE3 is similar and will not be described again.

So far, the description of Example 1 has been completed.

### Example 2:

Example 2 is described by taking the target direction as the outbound direction as an example:
Taking the network shown in FIG. 7 as an example, as shown in FIG. 7, both PE2 and PE3 are domain egress routers, and PE2 and PE3 have established BGP-LS neighbors.

PE2 detects an available bandwidth of a local domain interface Port2_4 in the outbound direction. PE3 will also detect an available bandwidth of a local domain interface Port3_5 in the outbound direction. In some examples, PE2 and PE3 may detect the available bandwidth of the local domain interface in the outbound direction according to the same period. In combination with Example 1, PE2 can detect the available bandwidth of the local domain interface Port2_4 in the inbound direction and the outbound direction in the same period, and PE3 is similar.

PE2 sends the available bandwidth of the local domain interface Port2_4 in the outbound direction to the BGP-LS neighbor, namely PE3, through the interface Port2_3. PE3 sends the available bandwidth of the local domain interface Port3_5 in the outbound direction to the BGP-LS neighbor, namely PE2, through the interface Port3_2.

Taking PE2 as an example, PE2 determines whether the available bandwidth of the local domain interface Port2_4 in the outbound direction is less than a lower limit of a preset available bandwidth threshold for the inbound direction. If so, it is determined that congestion occurs on the local domain interface Port2_4 in the outbound direction; otherwise, it is determined that congestion does not occur on the local domain interface Port2_4 in the outbound direction.

In addition, PE2 will further determine whether the local domain interface Port3_5 of PE3 is congested based on the received available bandwidth of the local domain interface Port3_5 of PE3 in the outbound direction. For example, it is determined whether the available bandwidth of Port3_5 in the outbound direction is greater than or equal to the lower limit of the preset available bandwidth threshold for the outbound direction, and if so, it is determined that Port3_5 is not congested in the outbound direction.

It should be noted that Example 2 is described taking PE2 and PE3 sending available bandwidth as an example. If PE3 does not send the available bandwidth of the domain interface Port3_5 in the outbound direction, but sends the utilization bandwidth of the domain interface Port3_5 in the outbound direction, PE2 can determine the available bandwidth of the domain interface Port3_5 in the outbound direction based on a maximum allowed available bandwidth (i.e., total bandwidth) and the utilization bandwidth of the domain interface Port3_5 in the outbound direction.

In some examples, in this example, the total allowed bandwidth of all domain interfaces in the outbound direction may be the same by default, or the total allowed bandwidth of the local domain interface Port3_5 of PE3 in the outbound direction may be pre-configured on PE2. Or, PE3 may carry the total allowed bandwidth of the local domain interface Port3_5 in the outbound direction through a defined total bandwidth TLV. This example is not specifically limited.

It should be noted that the above is described in terms of available bandwidth as an example, and this example may also determine congestion based on utilization bandwidth. For details, please refer to Example 1, which is not repeated here.

If PE2 determines that the local domain interface Port2_4 is congested in the outbound direction and determines that the domain interface Port3_5 on PE3 is not congested in the outbound direction, a first bandwidth difference between a set outbound bandwidth threshold and an available bandwidth of Port2_4 in the outbound direction will be calculated, the outbound bandwidth threshold refers to a threshold when messages are normally received in the outbound direction, which is generally greater than the lower limit of the preset available bandwidth threshold. A second bandwidth difference between an available bandwidth of Port3_5 in the outbound direction and the set outbound bandwidth threshold will also be calculated. If the second bandwidth difference is found to be greater than or equal to the first bandwidth difference, PE2 performs congestion adjustment on the local domain interface Port2_4. For ease of description, the second bandwidth difference may be referred to as the adjustable bandwidth of the local domain interface Port3_5 on PE3.

Specifically, when PE2 performs congestion adjustment on the local domain interface Port2_4, firstly, according to the counted traffic (or the number of messages) received by the local domain interface Port2_4 in the outbound direction and sent to each network, the networks are sorted to obtain a sequence, and at least one target network is selected from the sequence. The sum of the counted number of messages received by the local domain interface Port2_4 in the outbound direction and sent to each of the target networks is less than or equal to the number of messages allowed to be carried by the adjustable bandwidth of the local domain interface Port3_5 on PE3. This approach ensures that the network with the largest number of messages is preferentially selected as the target network.

After determining the target network, PE2 adjusts the MED value for the route of the target network and advertises it in the outbound direction through the local interface Port2_1. The adjusted MED value indicates a lower priority than the MED value before adjustment. Generally, the smaller the MED value, the higher the priority. Based on this, in this example, adjusting the MED value for the route of the target network may be as follows: increasing the MED value for the route of the target network (for example, increasing by 100).

For example, the target network is a network corresponding to an IP address of PE4. PE2 and PE3 have previously advertised the route of PE4 to PE1. After the above adjustment, the MED value for the route of PE4 currently advertised by PE2 is not only greater than the MED value for the route of PE4 previously advertised by PE2 but also greater than the MED value for the route of PE4 previously advertised by PE3, in order to finally realize that the route of PE4 advertised by PE3 is better than the route of PE1 currently advertised by PE2. Based on this, when PE1 subsequently sends a message to PE4, it will prefer the route of PE4 advertised by PE3 based on the MED value for the latest route of PE4 advertised by PE2 and the priority for the route of PE4 previously published by PE3, i.e., the message that PE1 sends to PE4 no longer passes through PE2, but is forwarded through PE3. This is illustrated by the dashed line in FIG. 7.

In this example, PE2 adjusts the MED value for the route of the target network and advertises it in the outbound direction through the local interface Port2_1, which further includes sending the adjustment result to PE3 through Port2_3. The adjustment result at least includes an indication that the priority for the route of the target network has been adjusted, so as to prevent the route shock caused by the subsequent adjustment of the route of the same target network by PE3. For example, the target network is a network corresponding to an IP address of PE4, and PE3 will not adjust the route of PE4 regardless of whether the local interface is congested or not.

The above description takes PE2 as an example, and PE3 is similar and will not be described again.

So far, the description of Example 2 has been completed.

The method provided by the examples of the present disclosure is described above, and the apparatus provided by the examples of the present disclosure is described below.

Referring to FIG. 8, FIG. 8 is a structural diagram of an apparatus according to an example of present disclosure. The apparatus is applied to a domain egress router of a domain, and the domain egress router locally includes a first domain interface for connecting a device outside the domain, and the apparatus includes:
a sending unit, to send current first link quality information of the first domain interface to a neighbor device of the domain egress router, where the first link quality information includes current link quality information of the first domain interface in an inbound direction and/or current link quality information of the first domain interface in an outbound direction;
a receiving unit, to receive current second link quality information of a local second domain interface on the neighbor device sent by the neighbor device, where the second link quality information includes current link quality information of the second domain interface in the inbound direction and/or current link quality information of the second domain interface in the outbound direction; and
where the first link quality information and the second link quality information are used for in response to determining that a congestion occurs on the first domain interface in a target direction, perform a congestion adjustment to switch a message from being transmitted via the first domain interface in the target direction to being transmitted via the second domain interface in the target direction, and the target direction is the inbound direction or the outbound direction.

In some examples, the apparatus further includes:
a processing unit, to perform, according to the first link quality information and the second link quality information, a congestion adjustment to reduce the congestion of the first domain interface in the target direction in response to determining, based on the first link quality information, that a congestion occurs on the first domain interface in the target direction, and determining, based on the second link quality information, that no congestion occurs on the second domain interface in the target direction.

In some examples, the determine, based on the first link quality information, that a congestion occurs on the first domain interface in the target direction specifically includes: determine, based on the first link quality information, a first available bandwidth of the first domain interface in the target direction, and in response to determining that the first available bandwidth is less than a lower limit of a preset available bandwidth threshold for the target direction, determine that a congestion occurs on the first domain interface in the target direction;
where the determine, based on the second link quality information, that no congestion occurs on the second domain interface in the target direction specifically includes: determine, based on the second link quality information, a second available bandwidth of the second domain interface in the target direction, and in response to determining that the second available bandwidth is greater than or equal to the lower limit of the preset available bandwidth threshold, determine that no congestion occurs on the second domain interface in the target direction.

In some examples, the perform, according to the first link quality information and the second link quality information, a congestion adjustment to reduce the congestion of the first domain interface in the target direction includes: determine, according to the first link quality information and the second link quality information, whether a current message carrying capacity of the second domain interface in the target direction allows carrying the message originally transmitted via the first domain interface in the target direction; in response to determining that the current message carrying capacity of the second domain interface in the target direction allows carrying the message originally transmitted via the first domain interface in the target direction, adjust a priority for a route of a target network previously advertised by the domain egress router to a target device, where the adjusted priority is lower than the priority before adjustment, the neighbor device is connected to the target device and a priority for a route of the target network previously advertised by the neighbor device to the target device is higher than the adjusted priority; and
advertise the adjusted priority for the route of the target network to the target device, to cause the target device, when sending a message to the target network, selects the route of the target network advertised by the neighbor device to send the message based on the adjusted priority for the route of the target network advertised by the domain egress router and the priority for the route of the target network advertised by the neighbor device.

In some examples, determine, according to the first link quality information and the second link quality information, whether a current message carrying capacity of the second domain interface in the target direction allows carrying the message originally transmitted via the first domain interface in the target direction specifically includes: calculate a first bandwidth difference between a preset target direction bandwidth threshold and a first available bandwidth of the first domain interface in the target direction, where the target direction bandwidth threshold indicates a threshold when the first domain interface and the second domain interface normally receive a message in the target direction, and the first available bandwidth is obtained based on the first link quality information; calculate a second bandwidth difference between a second available bandwidth of the second domain interface in the target direction and the target direction bandwidth threshold, where the second available bandwidth is obtained based on the second link quality information; and in response to determining that the second bandwidth difference is greater than or equal to the first bandwidth difference, determine that the current message carrying capacity of the second domain interface in the target direction allows carrying the message originally transmitted via the first domain interface in the target direction.

In some examples, the first domain interface is different from a third interface on the domain egress router that connects to the neighbor device,
the congestion adjustment unit is further to: send, via the third interface, a route priority adjustment result to the neighbor device, where the route priority adjustment result indicates that the neighbor device is prohibited from adjusting the priority for the route of the target network.

In some examples, the adjust a priority for a route of a target network previously advertised by the domain egress router to a target device specifically includes: adjust a multi-exit discriminator (MED) value for the route of the target network previously advertised by the domain egress router to the target device, where a priority indicated by the adjusted MED value is lower than a priority indicated by the MED value before adjustment and lower than a priority indicated by a MED value for the route of the target network advertised by the neighbor device.

In some examples, the target network is determined by: counting traffic of each network transmitted in the target direction of the first domain interface within a set time period; selecting, based on the traffic of each network and target traffic, at least one network as the target network, where a sum of traffic of each target network transmitted in the target direction of the first domain interface is less than or equal to the target traffic, where the target traffic indicates traffic that an adjustable bandwidth of the second domain interface in the target direction allows to carry, and the adjustable bandwidth of the second domain interface in the target direction is less than or equal to a difference between a second available bandwidth of the second domain interface in the target direction and a preset target direction bandwidth threshold, the second available bandwidth is obtained based on the second link quality information, and the target direction bandwidth threshold indicates a threshold when the first domain interface normally transmits a message in the target direction.

In some examples, the first link quality information includes an available bandwidth of the first domain interface currently in the inbound direction and/or a utilization bandwidth of the first domain interface currently in the inbound direction, and a first available bandwidth is the available bandwidth of the first domain interface currently in the inbound direction.
the second link quality information includes an available bandwidth of the second domain interface currently in the inbound direction and/or a utilization bandwidth of the second domain interface currently in the inbound direction, and a second available bandwidth is the available bandwidth of the second domain interface currently in the inbound direction;
the available bandwidth of the first domain interface or the second domain interface currently in the inbound direction is carried in a type-length-value (TLV) of an inbound direction available bandwidth attribute of a specified message, where the TLV includes a type field T, a length field L, and a value field V, the type field indicates a type, the length field indicates a length, and the value field indicates the available bandwidth in the inbound direction;
and/or, the utilization bandwidth of the first domain interface or the second domain interface currently in the inbound direction is carried in a TLV of an inbound direction utilization bandwidth attribute of the specified message, where the TLV includes a type field T, a length field L, and a value field V, the type field indicates a type, the length field indicates a length, and the value field indicates the utilization bandwidth in the inbound direction.

In some examples, the first link quality information further includes: an available bandwidth of the first domain interface currently in the outbound direction and/or a utilization bandwidth of the first domain interface currently in the outbound direction; the second link quality information includes an available bandwidth of the second domain interface currently in the outbound direction and/or a utilization bandwidth of the second domain interface currently in the outbound direction; a first available bandwidth is the available bandwidth of the first domain interface currently in the outbound direction; and a second available bandwidth is the available bandwidth of the second domain interface currently in the outbound direction.

At this point, the structural description of the apparatus shown in FIG. 8 is completed.

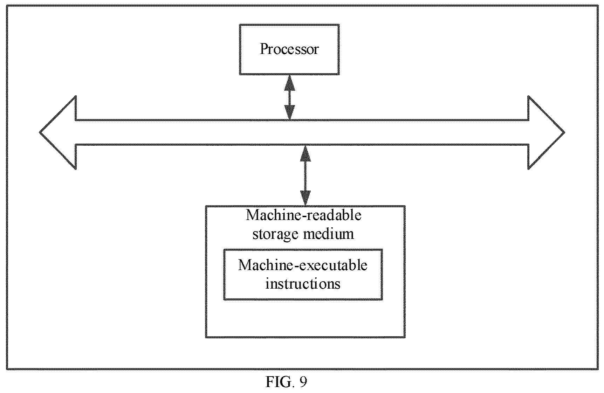

An example of the present disclosure further provides a hardware structure of the apparatus shown in FIG. 8. Referring to FIG. 9, FIG. 9 is a structural diagram of an electronic device according to an example of present disclosure. As shown in FIG. 9, the hardware structure may include a processor and a machine-readable storage medium, where the machine-readable storage medium stores machine-executable instructions executable by the processor, and the processor is to execute the machine-executable instructions to implement the method disclosed in the above examples of the present disclosure.

Based on the same application concept as the above method, an example of the present disclosure further provides a machine-readable storage medium, the machine-readable storage medium having stored thereon a number of computer instructions, the computer instructions, when executed by a processor, being capable of realizing the method disclosed in the above example of the present disclosure.

For example, the machine-readable storage medium may be any electronic, magnetic, optical or other physical storage apparatus, and may contain or store information, such as executable instructions, data, and the like. For example, the machine-readable storage medium may be: a random access memory (RAM), a volatile memory, a non-volatile memory, a flash memory, a storage drive (e.g., a hard disk drive), a solid state drive, any type of storage disk (e.g., optical disk, dvd, etc.), or the like, or a combination thereof.

The above is only examples of the present disclosure and is not intended to limit the present disclosure. Various modifications and variations of the present disclosure will occur to those skilled in the art. Any modifications, equivalent substitutions, improvements, etc. made within the spirit and principle of the present disclosure should be included in the scope of the claims of the present disclosure.

## Claims

1. A message forwarding method, performed by a domain egress router of a domain, wherein the domain egress router comprises a first domain interface for connecting a device outside the domain, and the method comprises:
sending current first link quality information of the first domain interface to a neighbor device of the domain egress router, wherein the first link quality information comprises at least one of current link quality information of the first domain interface in an inbound direction or current link quality information of the first domain interface in an outbound direction;
receiving current second link quality information of a local second domain interface on the neighbor device sent by the neighbor device, wherein the second link quality information comprises at least one of current link quality information of the second domain interface in the inbound direction or current link quality information of the second domain interface in the outbound direction; and
wherein the first link quality information and the second link quality information are used for, in response to determining that a congestion occurs on the first domain interface in a target direction, performing a congestion adjustment to switch a message from being transmitted via the first domain interface in the target direction to being transmitted via the second domain interface in the target direction, and the target direction is the inbound direction or the outbound direction.

2. The method according to claim 1, further comprising:
in response to
determining, based on the first link quality information, that a congestion occurs on the first domain interface in the target direction, and
determining, based on the second link quality information, that no congestion occurs on the second domain interface in the target direction,
performing, according to the first link quality information and the second link quality information, a congestion adjustment to reduce the congestion of the first domain interface in the target direction.

3. The method according to claim 2,
wherein the determining, based on the first link quality information, that a congestion occurs on the first domain interface in the target direction specifically comprises:
determining, based on the first link quality information, a first available bandwidth of the first domain interface in the target direction, and
in response to determining that the first available bandwidth is less than a lower limit of a preset available bandwidth threshold for the target direction, determining that a congestion occurs on the first domain interface in the target direction;
wherein the determining, based on the second link quality information, that no congestion occurs on the second domain interface in the target direction specifically comprises:
determining, based on the second link quality information, a second available bandwidth of the second domain interface in the target direction, and
in response to determining that the second available bandwidth is greater than or equal to the lower limit of the preset available bandwidth threshold, determining that no congestion occurs on the second domain interface in the target direction.

4. The method according to claim 2, wherein the performing, according to the first link quality information and the second link quality information, a congestion adjustment to reduce the congestion of the first domain interface in the target direction comprises:
determining, according to the first link quality information and the second link quality information, whether a current message carrying capacity of the second domain interface in the target direction allows carrying the message originally transmitted via the first domain interface in the target direction;
in response to determining that the current message carrying capacity of the second domain interface in the target direction allows carrying the message originally transmitted via the first domain interface in the target direction, adjusting a priority for a route of a target network previously advertised by the domain egress router to a target device, wherein the adjusted priority is lower than the priority before adjustment, the neighbor device is connected to the target device and a priority for a route of the target network previously advertised by the neighbor device to the target device is higher than the adjusted priority; and
advertising the adjusted priority for the route of the target network to the target device, to cause the target device, when sending a message to the target network, selects the route of the target network advertised by the neighbor device to send the message based on the adjusted priority for the route of the target network advertised by the domain egress router and the priority for the route of the target network advertised by the neighbor device.

5. The method according to claim 4, wherein determining, according to the first link quality information and the second link quality information, whether a current message carrying capacity of the second domain interface in the target direction allows carrying the message originally transmitted via the first domain interface in the target direction specifically comprises:
calculating a first bandwidth difference between a preset target direction bandwidth threshold and a first available bandwidth of the first domain interface in the target direction, wherein the target direction bandwidth threshold indicates a threshold when the first domain interface and the second domain interface normally receive a message in the target direction, and the first available bandwidth is obtained based on the first link quality information;
calculating a second bandwidth difference between a second available bandwidth of the second domain interface in the target direction and the target direction bandwidth threshold, wherein the second available bandwidth is obtained based on the second link quality information; and
in response to determining that the second bandwidth difference is greater than or equal to the first bandwidth difference, determining that the current message carrying capacity of the second domain interface in the target direction allows carrying the message originally transmitted via the first domain interface in the target direction.

6. The method according to claim 4, wherein the first domain interface is different from a third interface on the domain egress router that connects to the neighbor device, and the method further comprises:
sending, via the third interface, a route priority adjustment result to the neighbor device, wherein the route priority adjustment result indicates that the neighbor device is prohibited from adjusting the priority for the route of the target network.

7. The method according to claim 4, wherein adjusting a priority for a route of a target network previously advertised by the domain egress router to a target device specifically comprises:
adjusting a multi-exit discriminator, MED, value for the route of the target network previously advertised by the domain egress router to the target device, wherein a priority indicated by the adjusted MED value is lower than a priority indicated by the MED value before adjustment and lower than a priority indicated by a MED value for the route of the target network advertised by the neighbor device.

8. The method according to claim 4, wherein the target network is determined by:
counting traffic of each network transmitted in the target direction of the first domain interface within a set time period;
selecting, based on the traffic of each network and target traffic, at least one network as the target network, wherein a sum of traffic of each target network transmitted in the target direction of the first domain interface is less than or equal to the target traffic,
wherein the target traffic indicates traffic that an adjustable bandwidth of the second domain interface in the target direction allows to carry, and the adjustable bandwidth of the second domain interface in the target direction is less than or equal to a difference between a second available bandwidth of the second domain interface in the target direction and a preset target direction bandwidth threshold, the second available bandwidth is obtained based on the second link quality information, and the target direction bandwidth threshold indicates a threshold when the first domain interface normally transmits a message in the target direction.

9. The method according to claim 1, wherein,
the first link quality information comprises at least one of an available bandwidth of the first domain interface currently in the inbound direction or a utilization bandwidth of the first domain interface currently in the inbound direction, and a first available bandwidth is the available bandwidth of the first domain interface currently in the inbound direction;
the second link quality information comprises at least one of an available bandwidth of the second domain interface currently in the inbound direction or a utilization bandwidth of the second domain interface currently in the inbound direction, and a second available bandwidth is the available bandwidth of the second domain interface currently in the inbound direction;
the available bandwidth of the first domain interface or the second domain interface currently in the inbound direction is carried in a type-length-value, TLV, of an inbound direction available bandwidth attribute of a specified message, wherein the TLV comprises a type field T, a length field L, and a value field V, the type field indicates a type, the length field indicates a length, and the value field indicates the available bandwidth in the inbound direction; and/or,
the utilization bandwidth of the first domain interface or the second domain interface currently in the inbound direction is carried in a TLV of an inbound direction utilization bandwidth attribute of the specified message, wherein the TLV comprises a type field T, a length field L, and a value field V, the type field indicates a type, the length field indicates a length, and the value field indicates the utilization bandwidth in the inbound direction.

10. The method according to claim 1 or 9, wherein
the first link quality information further comprises at least one of: an available bandwidth of the first domain interface currently in the outbound direction or a utilization bandwidth of the first domain interface currently in the outbound direction; the second link quality information comprises at least one of an available bandwidth of the second domain interface currently in the outbound direction or a utilization bandwidth of the second domain interface currently in the outbound direction; a first available bandwidth is the available bandwidth of the first domain interface currently in the outbound direction; and a second available bandwidth is the available bandwidth of the second domain interface currently in the outbound direction.

11. A message forwarding apparatus, applied to a domain egress router of a domain, wherein the domain egress router locally comprises a first domain interface for connecting a device outside the domain and the apparatus comprising:
a sending unit, to send current first link quality information of the first domain interface to a neighbor device of the domain egress router, wherein the first link quality information comprises at least one of current link quality information of the first domain interface in an inbound direction or current link quality information of the first domain interface in an outbound direction;
a receiving unit, to receive current second link quality information of a local second domain interface on the neighbor device sent by the neighbor device, wherein the second link quality information comprises at least one of current link quality information of the second domain interface in the inbound direction or current link quality information of the second domain interface in the outbound direction; and
wherein the first link quality information and the second link quality information are used for in response to determining that a congestion occurs on the first domain interface in a target direction, performing a congestion adjustment to switch a message from being transmitted via the first domain interface in the target direction to being transmitted via the second domain interface in the target direction, and the target direction is the inbound direction or the outbound direction.

12. The apparatus according to claim 11, further comprising:
a processing unit, to perform, according to the first link quality information and the second link quality information, a congestion adjustment to reduce the congestion of the first domain interface in the target direction in response to determining, based on the first link quality information, that a congestion occurs on the first domain interface in the target direction, and determining, based on the second link quality information, that no congestion occurs on the second domain interface in the target direction.

13. The apparatus according to claim 12, wherein the determine, based on the first link quality information, that a congestion occurs on the first domain interface in the target direction specifically comprises:
determine, based on the first link quality information, a first available bandwidth of the first domain interface in the target direction, and
in response to determining that the first available bandwidth is less than a lower limit of a preset available bandwidth threshold for the target direction, determine that a congestion occurs on the first domain interface in the target direction;
wherein the determine, based on the second link quality information, that no congestion occurs on the second domain interface in the target direction specifically comprises:
determine, based on the second link quality information, a second available bandwidth of the second domain interface in the target direction, and
in response to determining that the second available bandwidth is greater than or equal to the lower limit of the preset available bandwidth threshold, determine that no congestion occurs on the second domain interface in the target direction.

14. The apparatus according to claim 12, wherein the perform, according to the first link quality information and the second link quality information, a congestion adjustment to reduce the congestion of the first domain interface in the target direction comprises:
determine, according to the first link quality information and the second link quality information, whether a current message carrying capacity of the second domain interface in the target direction allows carrying the message originally transmitted via the first domain interface in the target direction;
in response to determining that the current message carrying capacity of the second domain interface in the target direction allows carrying the message originally transmitted via the first domain interface in the target direction, adjust a priority for a route of a target network previously advertised by the domain egress router to a target device, wherein the adjusted priority is lower than the priority before adjustment, the neighbor device is connected to the target device and a priority for a route of the target network previously advertised by the neighbor device to the target device is higher than the adjusted priority; and
advertise the adjusted priority for the route of the target network to the target device, to cause the target device, when sending a message to the target network, selects the route of the target network advertised by the neighbor device to send the message based on the adjusted priority for the route of the target network advertised by the domain egress router and the priority for the route of the target network advertised by the neighbor device.

15. The apparatus according to claim 14, wherein determine, according to the first link quality information and the second link quality information, whether a current message carrying capacity of the second domain interface in the target direction allows carrying the message originally transmitted via the first domain interface in the target direction specifically comprises:
calculate a first bandwidth difference between a preset target direction bandwidth threshold and a first available bandwidth of the first domain interface in the target direction, wherein the target direction bandwidth threshold indicates a threshold when the first domain interface and the second domain interface normally receive a message in the target direction, and the first available bandwidth is obtained based on the first link quality information;
calculate a second bandwidth difference between a second available bandwidth of the second domain interface in the target direction and the target direction bandwidth threshold, wherein the second available bandwidth is obtained based on the second link quality information; and
in response to determining that the second bandwidth difference is greater than or equal to the first bandwidth difference, determine that the current message carrying capacity of the second domain interface in the target direction allows carrying the message from being transmitted via the first domain interface in the target direction.

16. The apparatus according to claim 14, wherein the first domain interface is different from a third interface on the domain egress router that connects to the neighbor device, the congestion adjustment unit is further to:
send, via the third interface, a route priority adjustment result to the neighbor device, wherein the route priority adjustment result indicates that the neighbor device is prohibited from adjusting the priority for the route of the target network.

17. The apparatus according to claim 14, wherein,
the adjust a priority for a route of a target network previously advertised by the domain egress router to a target device specifically comprises:
adjust a multi-exit discriminator, MED, value for the route of the target network previously advertised by the domain egress router to the target device, wherein a priority indicated by the adjusted MED value is lower than a priority indicated by the MED value before adjustment and lower than a priority indicated by a MED value for the route of the target network advertised by the neighbor device.

18. The apparatus according to claim 14, wherein the target network is determined by:
counting traffic of each network transmitted in the target direction of the first domain interface within a set time period;
selecting, based on the traffic of each network and target traffic, at least one network as the target network, wherein a sum of traffic of each target network transmitted in the target direction of the first domain interface is less than or equal to the target traffic,
wherein the target traffic indicates traffic that an adjustable bandwidth of the second domain interface in the target direction allows to carry, and the adjustable bandwidth of the second domain interface in the target direction is less than or equal to a difference between a second available bandwidth of the second domain interface in the target direction and a preset target direction bandwidth threshold, the second available bandwidth is obtained based on the second link quality information, and the target direction bandwidth threshold indicates a threshold when the first domain interface normally transmits a message in the target direction.

19. The apparatus according to claim 11, wherein,
the first link quality information comprises at least one of an available bandwidth of the first domain interface currently in the inbound direction or a utilization bandwidth of the first domain interface currently in the inbound direction, and a first available bandwidth is the available bandwidth of the first domain interface currently in the inbound direction;
the second link quality information comprises at least one of an available bandwidth of the second domain interface currently in the inbound direction or a utilization bandwidth of the second domain interface currently in the inbound direction, and a second available bandwidth is the available bandwidth of the second domain interface currently in the inbound direction;
the available bandwidth of the first domain interface or the second domain interface currently in the inbound direction is carried in a type-length-value, TLV, of an inbound direction available bandwidth attribute of a specified message, wherein the TLV comprises a type field T, a length field L, and a value field V, the type field indicates a type, the length field indicates a length, and the value field indicates the available bandwidth in the inbound direction; and/or,
the utilization bandwidth of the first domain interface or the second domain interface currently in the inbound direction is carried in a TLV of an inbound direction utilization bandwidth attribute of the specified message, wherein the TLV comprises a type field T, a length field L, and a value field V, the type field indicates a type, the length field indicates a length, and the value field indicates the utilization bandwidth in the inbound direction.

20. The apparatus according to claim 1 or 19, wherein the first link quality information further comprises at least one of: an available bandwidth of the first domain interface currently in the outbound direction or a utilization bandwidth of the first domain interface currently in the outbound direction; the second link quality information comprises at least one of an available bandwidth of the second domain interface currently in the outbound direction or a utilization bandwidth of the second domain interface currently in the outbound direction; a first available bandwidth is the available bandwidth of the first domain interface currently in the outbound direction; and a second available bandwidth is the available bandwidth of the second domain interface currently in the outbound direction.

21. An electronic device comprising: a processor and a machine-readable storage medium;
the machine readable storage medium stores machine-executable instructions executable by the processor,
and the processor is to execute the machine-executable instructions to perform the methods according to any one of claims 1 to 10.
